# EUROPEAN PATENT SPECIFICATION

(11) **EP 3 531 795 B1**
(45) Date of publication and mention of the grant of the patent: **03.06.2020**
(21) Application number: 18158540.7
(22) Date of filing: 26.02.2018
(51) Int. Cl.: H04W 84/04, H04W 88/02, H04W 92/04, H04W 92/06

(54) **SYSTEM AND ENODEB FOR MULTICAST COMMUNICATION IN AN LTE CELLULAR NETWORK**
SYSTEM UND ENODEB FÜR MULTICAST-KOMMUNIKATION IN EINEM LTE-MOBILFUNKNETZ
SYSTÈME ET NOEUD B ÉVOLUÉ (ENODEB) POUR UNE COMMUNICATION DE MULTIDIFFUSION DANS UN RÉSEAU CELLULAIRE LTE

(43) Date of publication of application: 28.08.2019
(73) Proprietor: KONTRON TRANSPORTATION FRANCE SAS, 78066 St Quentin Yvelines Cedex (FR)
(72) Inventor: EHEIM, Christine, 85737 Ismaning (DE); PLAINFOSSE, David, 92140 Clamart (FR); GRUET, Christophe, 78180 Montigny le Bretonneux (FR)
(74) Representative: Weiser & Voith Patentanwälte Partnerschaft

(56) References cited:
- WO-A1-2013/138020
- US-A1- 2007 280 230
- US-A1- 2013 007 814

## Description

The invention relates to a system for multicast communication from an Application Server (AS) to at least two User Equipments (UEs), the system being configured for an LTE (Long Term Evolution) cellular network and comprising an Evolved Packet Core (EPC) having a first interface for receiving unicast user messages and a second interface for outputting unicast user messages; a Broadcast Multicast Service Center (BMSC) and a Multimedia Broadcast Multicast Service Gateway (MBMS-GW) for multicast communication. The invention further relates to an eNodeB (evolved Node B) of said system.

In LTE cellular networks, multicast communication has become an important tool to reach a group of UEs that want to receive the same message (a live stream, news, security messages, ...) from a provider, e.g., an Application Server (AS). For this purpose, various technologies exist, ranging from multiplying messages in the eNodeB and transmitting the message over multiple Physical Downlink Shared Channels (PDSCH) to Multimedia Broadcast Multicast Service (MBMS) specified in Release 12 of the LTE Standards and Single Cell Point-to-Multipoint (SC-PTM) specified in Release 13 of the LTE Standards. These technologies have been described in Awada A., Navrátil D., and Säily M., "A Study on Single-Cell Point-to-Multipoint Transmission for Public Safety Communications with eMBMS LTE Networks"; Daher A., Coupechoux M., Godlewski P., Ngouat P., and Minot P., "SC-PTM or MBSFN for Mission Critical Communications" and Kim J., Choi S.W., Shin W.Y., Song Y.S., and Kim Y.K, "Group Communication Over LTE: A Radio Access Perspective", for example.

In the MBMS architecture, Application Servers transmit either unicast or multicast messages to an eNodeB. For these two types of messages, two different, partially overlapping infrastructures exist, for unicast the Evolved Packet Core (EPC) and for multicast messages primarily the Broadcast Multimedia Service Center (BMSC) and the Multimedia Broadcast Multicast Service Gateway (MBMS-GW). This infrastructure allows unicast and multicast messages from the Application Server to be transmitted to an eNodeB, which then communicates the unicast message to a specific UE and the multicast messages to a group of at least two UEs.

The MBMS-GW and BMSC are hardware components in the domain of the EPC and are a huge investment in the LTE cellular network. This is a problem especially for small-scale cellular networks such as public safety or railway cellular networks because the investment of MBMS-GW and BMSC stands in no relation to the cost of the overall cellular network.

WO 2013/138020 A1 shows a multicast-enabled LTE system in which a proxy UE is used. Communication between the media server and the proxy UE is performed via multicast communication, to which end the proxy UE is equipped with a regular MBMS access client. The purpose of the proxy UE is to translate an incoming multicast communication to HTTP signalling.

The invention is defined by the appended claims. It is an object of the invention to create a system for LTE multicast communication which can be established in a cost effective manner.

In a first aspect of the invention, this aim is achieved with a system for multicast communication from an Application Server to at least two User Equipments, the system being configured for an LTE cellular network and comprising
an Evolved Packet Core having a first interface for receiving unicast user messages and a second interface for outputting unicast user messages;
a Broadcast Multicast Service Center and a Multimedia Broadcast Multicast Service Gateway for multicast communication;
at least one eNodeB for communicating with the User Equipments via an LTE air interface, the eNodeB being connected to the second interface of the Evolved Packet Core for receiving unicast user messages and having an M1 interface for receiving multicast user messages;
a multicast server connected to the first interface of the Evolved Packet Core and having an interface for receiving messages, which are to be sent to the at least two User Equipments, from the Application Server; and
a proxy User Equipment connected to the M1 interface of the eNodeB, the proxy User Equipment being registered with the Evolved Packet Core;
wherein the multicast server hosts the Broadcast Multicast Service Center and the Multimedia Broadcast Multicast Service Gateway and is configured to generate multicast user messages from the messages received from the Application Server by means of the Broadcast Multicast Service Center and the Multimedia Broadcast Multicast Service Gateway, to wrap the generated multicast user messages in at least one unicast user message, to establish a bearer with the proxy User Equipment via the Evolved Packet Core, and to communicate the unicast user messages to the proxy User Equipment via said bearer;
wherein the proxy User Equipment is configured to extract the multicast user messages from the unicast user messages received via said bearer and to output the generated multicast user messages to the M1 interface of the eNodeB; and
wherein the eNodeB is further configured to transmit the multicast user messages received from the proxy User Equipment to at least two User Equipments via the LTE air interface.

The inventive solution of modifying at least one eNodeB of the cellular network to comprise a proxy ("fake") User Equipment (UE) allows for the MBMS-GW and the BMSC to be established in the service domain. This effectivly means that the MBMS-GW and the BMSC do not need to be installed as costly infrastructure in the field. MBMS-GW and BMSC can now be embodied as a single (hardware or software) multicast server in the domain or at the site of the Application Server. For example, a police station could be equipped with the multicast server of the invention if the police wants to transmit a multicast message from a headquarter to a group of enforcers carrying individual UEs.

The shift of MBMS-GW and BMSC from the EPC domain to the service domain is further based on the inventive concept of adding a small piece of functionality to the existing eNodeBs in the field that are supposed to broadcast multicast messages to UEs. The proxy UE of the invention that is used to perform this functionality in the eNodeBs can, for example, be the same as a regular UE (e.g., a mobile phone), stripped-off its physical layer and supplemented with M1 (and M2/M3) interface functions to the eNodeB as disclosed.

By modifying only the eNodeBs in the field and implementing MBMS-GW and BMSC as a centralised hardware or software in the application domain, the cost of infrastructure can be greatly reduced, especially for small, dedicated public safety or railway cellular networks that do not comprise a large number of eNodeBs. No more hardware has to be installed in the EPC domain than in the case of cellular networks that only communicate unicast messages. The measures presented above therefore also facilitate the upgrade of cellular networks that are already equipped for LTE unicast communication.

In most cases, multicast-enabled LTE communication systems employ a Multi-Cell Coordination Entity (MCE) for scheduling radio resources for the multicast messages. The invention provides two embodiments for implementing this MCE in the system.

In a first preferred embodiment, the system comprises a Multi-Cell Coordination Entity that is hosted on the multicast server,
wherein the eNodeB has an M2 interface for receiving multicast control messages,
wherein the proxy User Equipment is further connected to the M2 interface of the eNodeB,
wherein the multicast server is further configured to generate multicast control messages from the messages received from the Application Server by means of the Broadcast Multicast Service Center, the Multimedia Broadcast Multicast Service Gateway, and the Multi-Cell Coordination Entity, and to wrap the generated multicast control messages in said at least one unicast user message, and
wherein the proxy User Equipment is configured to extract the multicast control messages from the received unicast user messages and to output the extracted multicast control messages to the M2 interface of the eNodeB.

This has the advantage that also the MCE can be hosted - as hardware or software - on the multicast server such that it can be removed from the infrastructure in the field.

In the second preferred embodiment, the system comprises a Multi-Cell Coordination Entity that is hosted on the eNodeB,
wherein the eNodeB has an M3 interface for receiving multicast control messages,
wherein the proxy User Equipment is further connected to the M3 interface of the eNodeB,
wherein the multicast server is further configured to generate multicast control messages from the messages received from the Application Server by means of the Broadcast Multicast Service Center and the Multimedia Broadcast Multicast Service Gateway, and to wrap the generated multicast control messages in at least one unicast user message,
wherein the proxy User Equipment is configured to extract the multicast control messages from the received unicast user messages and to output the extracted multicast control messages to the M3 interface of the eNodeB, and
wherein the eNodeB and the Multi-Cell Coordination Entity are configured to transmit the multicast user messages received from the proxy User Equipment to at least two User Equipments via the LTE air interface.

This has the advantage that the MCE can be implemented directly in the eNodeB, for example as a software implementation. Again, no hardware for the MCE has to be deployed in the EPC domain.

Preferably, said bearer, which is established between the multicast server and the proxy UE, is a default bearer. This has the advantage that the bearer can be set up in the easiest way without the need of setting up a dedicated bearer.

Alternatively, said bearer is a dedicated bearer on top of a default bearer. This has the advantage that a guaranteed bit-rate can be provided for multicast messages that are transmitted wrapped in unicast messages to the proxy UE. This can be especially advantageous for safety-critical messages, which are especially important for railway or public safety networks.

The proxy UE can be implemented in different ways. In a first preferred embodiment, the proxy User Equipment is hosted on the eNodeB as a software application. This has the advantage that the proxy UE can be deployed and set up very quickly and hardware modifications can be reduced to a minimum. Depending on the eNodeB, the M1 and M2 or M3 interfaces of the eNodeB can reduced to software connections within the eNodeB.

In a second preferred embodiment for implementing the proxy UE, the proxy User Equipment is a mobile phone and is configured to receive the unicast user messages via the LTE air interface and to output the extracted multicast user messages via a physical connection to the M1 interface of the eNodeB. This has the advantage that in emergency situations a mobile phone can be hooked up to an eNodeB and act as the proxy UE. For example, a cable could be plugged into the M1 (and M2 or M3) interface/s of the eNodeB and into a physical interface of the mobile phone, for example a USB interface. This requires little to no software modifications in the eNodeB such that any eNodeB can be adapted for the inventive system on the fly. This can be used, for example, if an accident or emergency occurs in a region of a specific eNodeB, in whose vicinity police officers or firefighters need to be deployed such that they can all receive multicast messages.

Further preferably, the multicast server comprises an eNodeB manager, configured to control the eNodeB via the M1 interface. By means of this, internal information only available at the eNodeB, e.g., information on the radio interface of the eNodeB or traffic data within the eNodeB, can be reported to the multicast server in order to make this information available to any external Application Server in the service domain. This architecture also gives the opportunity to remote control the different eNodeBs deployed in the field through the eNodeB manager centrally located in the multicast server. This is especially useful for operation, administration, and maintenance (OAM) purposes.

In a second aspect, the invention provides for an eNodeB for an LTE cellular network system for multicast communication from an Application Server to at least two User Equipments, wherein the eNodeB is configured for communicating with the User Equipments via an LTE air interface,
wherein the eNodeB is connected to an interface of an Evolved Packet Core for receiving unicast user messages and having an M1 interface for receiving multicast user messages;
wherein the eNodeB comprises a proxy User Equipment connected to the M1 interface of the eNodeB, the proxy User Equipment being registered with the Evolved Packet Core;
wherein the proxy User Equipment is configured to extract a multicast user message from unicast user messages received via said bearer and to output the generated multicast user message to the M1 interface of the eNodeB; and
wherein the eNodeB is further configured to transmit the multicast user messages received from the proxy User Equipment to at least two User Equipments via the LTE air interface.

The eNodeB can be utilized with the same embodiments and brings about the same effects and advantages as described above for the system.

The disclosed subject-matter will now be explained in more detail below on the basis of exemplary embodiments thereof with reference to the accompanying drawings in which:
Fig. 1 shows an MBMS architecture according to the state of the art in a block diagram,
Fig. 2 shows a first embodiment of the inventive architecture for multicast communication in a block diagram, and
Fig. 3 shows a second embodiment of the inventive architecture for multicast communication in a block diagram.

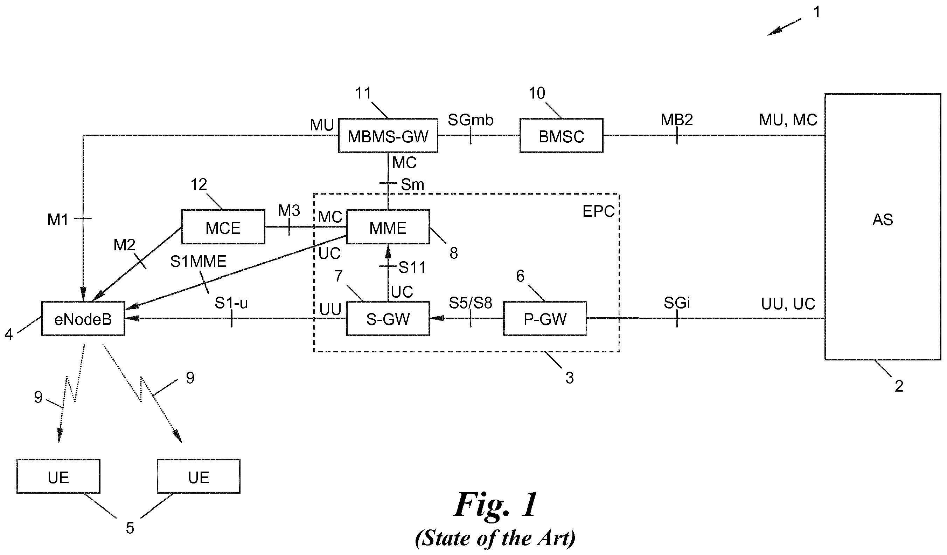

Fig. 1 shows an LTE system 1 according to the state of the art as defined in the 3GPP standards on LTE. In particular, multicast components, interfaces, and functionalities are defined in, e.g., 3GPP TR 36.890 (Release 13), 3GPP TR 36.913 (Release 12), or any equivalent earlier or later 3GPP LTE standard.

As shown in Fig. 1, unicast user messages UU and unicast control messages UC are to be transmitted from an Application Server (AS) 2 via an Evolved Packet Core (EPC) 3 and an evolved Node B (eNodeB) 4 to at least two user equipments (UEs) 5. The AS 2 is connected to the EPC 3 via an SGi interface for communicating unicast user and control messages UU, UC. The eNodeB 4 and the EPC 3 are connected via an S1-u interface. Commonly, multiple eNodeBs 4 are connected to one EPC 3, but for the purposed shown below, only one eNodeB 4 is depicted.

The EPC 3 comprises a packet gateway (P-GW) 6, a signalling gateway (S-GW) 7, and a mobility management entity (MME) 8 as known in the state of the art. The P-GW 6 and S-GW 7 are connected via an interface S5/S8, and the S-GW 7 and MME 8 are connected via an interface S11. The functionality of the P-GW 6 includes UE IP address allocation, the functionality of the S-GW 7 includes inter-eNodeB handover, and the functionality of the MME 8 comprises authentication and authorisation.

The S-GW 7 and the eNodeB 4 are connected via said S1-u interface for communicating unicast user messages UU, and the MME 8 is connected to the eNodeB 4 via an S1MME interface for communicating unicast control messages UC.

The eNodeB 4 communicates with the UEs 5 via an LTE air interface 9 as known to the skilled person. In its entirety, the system 1 with its Application Server 2, EPC 3, eNodeB 4, and UEs 5 is thus configured for an LTE cellular network.

In the state of the art depicted in Fig. 1, it is further known to implement multicast communication by a Multimedia Broadcast Multicast Service (MBMS) architecture comprising a Broadcast Multimedia Service Center (BMSC) connected to the Application Server 2 via an interface MB2 (more precisely two interfaces MB2-C and MB2-U for communicating multicast user and control messages MU, MC, respectively) and a Multimedia Broadcast Multicast Service Gateway (MBMS-GW) connected to the BMSC 10 via an SGmb interface. The BMSC 10 provides functionalities for MBMS user service initiation and delivery, while the MBMS-GW 11 broadcasts MBMS packets to each eNodeB 4. The MBMS-GW 11 is connected to the eNodeB 4 via an M1 interface for communicating multicast user messages MU. Furthermore, the MBMS-GW 11 is connected to the MME 8 via an Sm interface and the MME 8 is connected to a Multi-Cell Coordination Entity (MCE) 12 via an M3 interface, which in turn is connected to the eNodeB 4 via an M2 interface. This allows the MBMS-GW 11 to communicate multicast control messages through the MME 8 of the EPC 3 and the MCE 12 to the eNodeB 4.

With this MBMS architecture, the Application Server 2 can send multicast user and control messages MU, MC to a group of at least two UEs 5 in the range of eNodeBs 4 predetermined by the Application Server 2. The EPC 3 and its components P-GW 6, S-GW 7, and MME 8 as well as the multicast architecture comprising BMSC 10, MBMS-GW 11, and MCE 12 are constructed as hardware elements in the field. This type of system 1 is usually employed for public cellular networks with a multitude of eNodeBs covering vast areas. The multicast architecture is then used for communicating live video streams, for example.

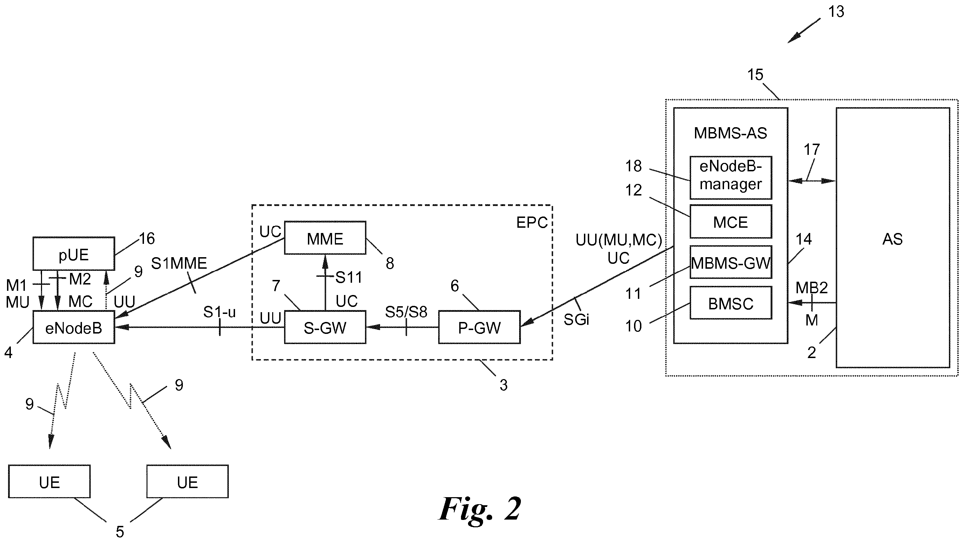

Fig. 2 shows a system 13 for multicast communication from an Application Server 2 of the type as shown for Fig. 1 to at least two UEs 5 by means of an LTE cellular network. Unicast functionalities for communicating unicast user messages UU directly from the Application Server 2 to the UEs 5 are the same as shown in Fig. 1 and thus not explained in further detail below. The EPC architecture as shown in Fig. 1 also applies for the embodiment of Fig. 2, and thus same reference numerals and same interfaces are given the same reference numerals and names as in Fig. 1.

For multicast communication, however, the system 13 comprises a multicast server 14 (which could also be called a "Multimedia Broadcast Multicast Service Application Server", MBMS-AS), which hosts the MBMS-GW 11 and BMSC 10 described above for Fig. 1. In contrast to the embodiment of Fig. 1, BMSC 10 and MBMS-GW 11 are not deployed in the field, i.e., in the domain of the EPC 2, but in a service domain 15 of the Application Server 2.

For multicast communication as outlined below, the eNodeB 4 comprises a proxy User Equipment (proxy UE) 16 that is connected to the M1 and M2 interfaces of the eNodeB 4. The proxy UE 16 is further registered with the EPC 3 in the same way as any regular UE 5.

The multicast server 14 hosts the above-described BMSC 10 and MBMS-GW 11 - be it as hardware or software entities - to generate multicast user and control messages MU, MC from messages M received from the Application Server 2 via the MB2 interface. The messages M received can be media data, from which the multicast user messages MU are generated, and destination data (which eNodeB should broadcast and/or which group of UEs should receive), from which the multicast control messages MC is generated. Alternatively, the messages M output from the Application Server can be the multicast user and control messages MU, MC themselves.

Unlike in the embodiment of Fig. 1, in the embodiment of Fig. 2 the multicast user and control messages MU, MC are to be communicated via the EPC 3 to the eNodeB 4. For this purpose, the multicast server 14 is connected to the EPC 3 via the SGi interface. There can also be additional interfaces between the multicast server 14 and the EPC 3, e.g., Rx and Gx interfaces that are employed in the state of the art between an Application Server and the EPC as known to the skilled person.

To transmit multicast user and control messages MU, MC from the multicast server 14 to the eNodeB 4, the multicast server 14 wraps the generated multicast user messages MU and/or multicast control messages MC in at least one unicast user message UU = f(MU and/or MC), "f" designating the wrapping, in short UU(MU,MC). The wrapping can be performed as needed, e.g., by wrapping one multicast user or control message MU, MC into one unicast user message UU (one-to-one correspondence), one multicast user message MU and one multicast control message MC into one unicast user message UU, more than one multicast user or control message MU, MC into one unicast user message UU, or by splitting up one multicast user or control message MU, MC into more than one unicast user message UU.

After, before, or during wrapping, the multicast server 14 establishes a bearer with the proxy UE 16 via the EPC 3 and eNodeB 4 for regular unicast communication. By means of this, the unicast user messages UU(MU,MC) containing the multicast user and/or control message/s MU, MC can be communicated from the multicast server 14 to the proxy UE 16. From the viewpoint of the EPC 3 and the eNodeB 4, this communication looks like a regular unicast user message UU that is sent to the destination of the proxy UE 16. As is evident to the skilled person, the multicast server can also generate a unicast control message UC for the unicast user message UU(MU,MC) generated by wrapping to ensure that the proxy UE correctly receives said unicast user message UU(MU,MC). This unicast control message UC is communicated as outlined above for Fig. 1.

Once the proxy UE 16 receives the unicast user message UU(MU,MC) containing the multicast user and/or control message/s MU, MC, the proxy UE 16 extracts the multicast user and/or control message/s MU, MC received via said bearer. For the purposes of simulating the reception an "ordinary" multicast user and/or control message/s MU, MC in the eNodeB 4, the proxy UE 16 is connected to the M1 and M2 interfaces of the eNodeB 4. After extracting the multicast user and/or control message/s MU, MC from the received unicast user message UU(MU,MC), the proxy UE 16 outputs the extracted multicast user and/or control message/s MU, MC to the respective M1 and M2 interfaces of the eNodeB 4, i.e., multicast user message/s MU to the M1 interface and multicast control message/s MC to the M2 interface. From the viewpoint of the eNodeB 4, this looks like a regular reception of multicast user and control messages MU, MC as in the embodiment of Fig. 1.

The proxy UE 16 can be implemented in different ways. Firstly, the proxy UE 16 can be hosted on the eNodeB 4 as a software application. This is the regular use case as it is a permanent solution without the need for additional hardware. In contrast to UEs 5 in the field, the proxy UE 16 does not need a physical layer, as it does not need to communicate with the eNodeB 4 via the LTE air interface 9. The communication of the unicast message UU(MU,MC), which would be performed for usual unicast user messages UU of regular UEs 5 over the LTE air interface 9, is in this case merely a transmission of data within the processor of the eNodeB 4. The same applies for the communication of the extracted multicast user and/or control message/s MU, MC from the proxy UE 16 to the eNodeB 4.

Alternatively, the proxy UE 16 can be a regular mobile phone which receives the unicast user messages UU(MU,MC) via the LTE air interface 9 from the eNodeB. To return the extracted multicast user and control messages MU, MC to the eNodeB 4, the mobile phone and the eNodeB 4 can be connected via a physical connection over the M1 interface of the eNodeB 4, for example a cable, a Bluetooth connection, or a WiFi connection.

Once the eNodeB 4 receives the extracted multicast user and/or control message/s MU, MC from the proxy UE 16, it transmits the received multicast user message MU to at least two UEs 5 via the LTE air interface 9 with the aid of the multicast control message MC configuring the eNodeB 4 and the UEs 5 accordingly for multicast transmission and reception.

In the embodiment of Fig. 2, the MCE 12 is hosted on the multicast server 14. Thus, the eNodeB 4 only needs to receive multicast control messages MC via the M2 interface as the M3 interface is implemented (by hardware or software) within the multicast server 14. In this embodiment, the multicast server 14 generates the multicast control messages MC from the messages M received on the Application Server 2 by means of the MBMS-GW 11, the BMSC 10, and the MCE 12.

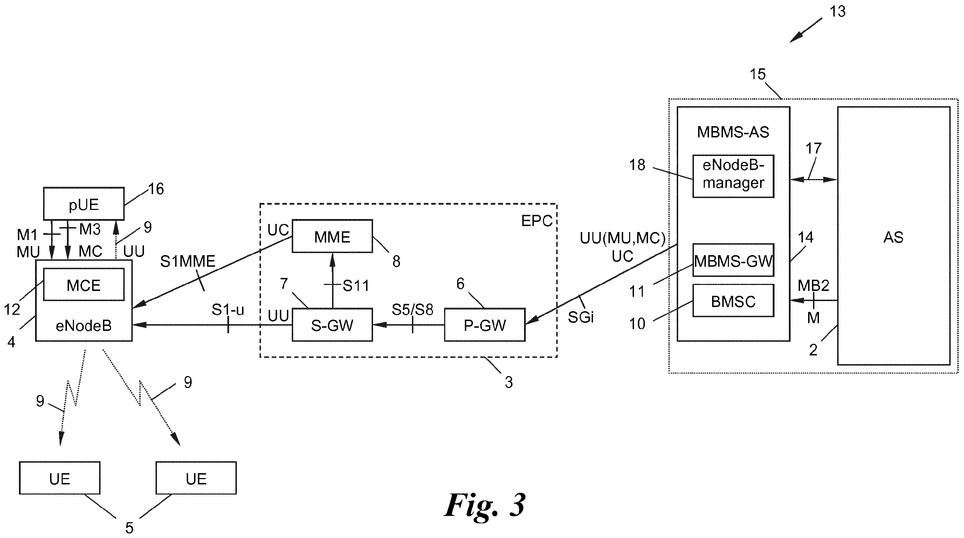

Fig. 3 shows an embodiment with the same structure, components, and functionalities as shown in Fig. 2, with the exception that the MCE 12 is implemented in the eNodeB 4. Here, the multicast server 14 generates the multicast control messages MC from messages M received from the Application Server 2 by means of the MBMS-GW 11 and the BMSC 10 only.

As the MCE is hosted on the eNodeB 4, the M2 interface is implemented (by hardware or software) within the eNodeB 4. The eNodeB 4 in this case exhibits interfaces M1 and M3 (of the MCE 12), at which it expects multicast user and control messages MU, MC to be received.

Here, after the proxy UE 16 receives and extracts the multicast control messages MC, it outputs them to the M3 interface of the MCE 12 of the eNodeB 4, while the extraction for multicast user messages M1 and feeding to the M1 interface thereof remains the same as in the embodiment of Fig. 2. Because the eNodeB 4 comprises the MCE 12, it can therefore be said that the eNodeB 4 and the MCE 12 are configured to transmit the multicast user messages MU received on the proxy UE 16 to at least two UEs 5 via the LTE interface on the basis of the multicast control message MC.

Above it has been detailed that the multicast server 14 establishes a bearer to the proxy UE 16 for communicating the unicast user message UU(MU,MC) containing the multicast user and/or control messages MU, MC. The bearer can either be a default bearer only or a dedicated bearer on top of a default bearer to achieve a guaranteed bit-rate.

The multicast server 14 and the proxy UE 16 can also be used for a secondary purpose, namely for feedback on or remote-control of internal configuration, traffic or radio interface data from the eNodeB to the multicast server 14 for organisation, administration, and maintenance (OAM) purposes. Via a connection 17 the multicast server 14 can also communicate this internal information obtained from the eNodeB 4 to external Application Servers, for example the Application Server 2 shown or a different Application Server. For this purpose, the multicast server 14 can also comprise an eNodeB-manager 18 to obtain said internal information from the eNodeB 4 or to remote-control the eNodeB 4.

The disclosed subject-matter is not restricted to the specific embodiments described in detail herein, but encompasses all variants, combinations and modifications thereof, that fall within the scope of the appended claims.

## Claims

1. System for multicast communication from an Application Server (2) to at least two User Equipments (5), the system (13) being configured for an LTE cellular network and comprising
an Evolved Packet Core (3) having a first interface (SGi) for receiving unicast user messages (UU) and a second interface (S1-u) for outputting unicast user messages (UU);
a Broadcast Multicast Service Center (10) and a Multimedia Broadcast Multicast Service Gateway (11) for multicast communication;
at least one eNodeB (4) for communicating with the User Equipments (5) via an LTE air interface (9), the eNodeB (4) being connected to the second interface (S1-u) of the Evolved Packet Core (3) for receiving unicast user messages (UU) and having an M1 interface for receiving multicast user messages (MU) ;
a multicast server (14) connected to the first interface (SGi) of the Evolved Packet Core (3) and having an interface (MB2) for receiving messages (M), which are to be sent to the at least two User Equipments (5), from the Application Server (2); and
a proxy User Equipment (16) connected to the M1 interface of the eNodeB (4), the proxy User Equipment (16) being registered with the Evolved Packet Core (3);
wherein the multicast server (14) hosts the Broadcast Multicast Service Center (10) and the Multimedia Broadcast Multicast Service Gateway (11) and is configured to generate multicast user messages (MU) from the messages (M) received from the Application Server (2) by means of the Broadcast Multicast Service Center (10) and the Multimedia Broadcast Multicast Service Gateway (11), to wrap the generated multicast user messages (MU) in at least one unicast user message (UU), to establish a bearer with the proxy User Equipment (16) via the Evolved Packet Core (3), and to communicate the unicast user messages (UU) to the proxy User Equipment (16) via said bearer;
wherein the proxy User Equipment (16) is configured to extract the multicast user messages (MU) from the unicast user messages (UU) received via said bearer and to output the generated multicast user messages (MU) to the M1 interface of the eNodeB (4); and
wherein the eNodeB (4) is further configured to transmit the multicast user messages (MU) received from the proxy User Equipment (16) to at least two User Equipments (5) via the LTE air interface (9).

2. The system according to claim 1, further comprising a Multi-Cell Coordination Entity (12) hosted on the multicast server (14),
wherein the eNodeB (4) has an M2 interface for receiving multicast control messages (MC),
wherein the proxy User Equipment (16) is further connected to the M2 interface of the eNodeB (4),
wherein the multicast server (14) is further configured to generate multicast control messages (MC) from the messages (M) received from the Application Server (2) by means of the Broadcast Multicast Service Center (10), the Multimedia Broadcast Multicast Service Gateway (11), and the Multi-Cell Coordination Entity (12), and to wrap the generated multicast control messages (MC) in said at least one unicast user message (UU), and
wherein the proxy User Equipment (16) is configured to extract the multicast control messages (MC) from the received unicast user messages (UU) and to output the extracted multicast control messages (MC) to the M2 interface of the eNodeB (4) .

3. The system according to claim 1, further comprising a Multi-Cell Coordination Entity (12) hosted on the eNodeB (4),
wherein the eNodeB (4) has an M3 interface for receiving multicast control messages (MC),
wherein the proxy User Equipment (16) is further connected to the M3 interface of the eNodeB (4),
wherein the multicast server (14) is further configured to generate multicast control messages (MC) from the messages (M) received from the Application Server (2) by means of the Broadcast Multicast Service Center (10) and the Multimedia Broadcast Multicast Service Gateway (11), and to wrap the generated multicast control messages (MC) in at least one unicast user message (UU),
wherein the proxy User Equipment (16) is configured to extract the multicast control messages (MC) from the received unicast user messages (UU) and to output the extracted multicast control messages (MC) to the M3 interface of the eNodeB (4), and
wherein the eNodeB (4) and the Multi-Cell Coordination Entity (12) are configured to transmit the multicast user messages (MU) received from the proxy User Equipment (16) to at least two User Equipments (5) via the LTE air interface (9).

4. The system according to any one of the claims 1 to 3, wherein said bearer is a default bearer.

5. The system according to any one of the claims 1 to 3, wherein said bearer is a dedicated bearer on top of a default bearer.

6. The system according to any one of the claims 1 to 5, wherein the proxy User Equipment (16) is hosted on the eNodeB (4) as a software application.

7. The system according to any one of the claims 1 to 5, wherein the proxy User Equipment (16) is a mobile phone and is configured to receive the unicast user messages (UU) via the LTE air interface (9) and to output the extracted multicast user messages (MU) via a physical connection to the M1 interface.

8. The system according to any one of the claims 1 to 7, wherein the multicast server (14) comprises an eNodeB manager (18), configured to control the eNodeB (14) via the M1 interface.

9. An eNodeB for an LTE cellular network system for multicast communication from an Application Server (2) to at least two User Equipments (5), wherein the eNodeB (4) is configured for communicating with the User Equipments (5) via an LTE air interface (9), and
wherein the eNodeB (4) is connected to an interface (S1-u) of an Evolved Packet Core (3) for receiving unicast user messages (UU) and having an M1 interface for receiving multicast user messages (MU);
wherein the eNodeB (4) comprises a proxy User Equipment (16) connected to the M1 interface of the eNodeB (4), the proxy User Equipment (16) being registered with the Evolved Packet Core (3);
wherein the proxy User Equipment (16) is configured to extract a multicast user message (MU) from unicast user messages (UU), which are received via a bearer from the Evolved Packet Core (3) and which are multicast messages wrapped as unicast messages, and to output the generated multicast user message (MU) to the M1 interface of the eNodeB (4); and
wherein the eNodeB (4) is further configured to transmit the multicast user messages (MU) received from the proxy User Equipment (16) to at least two User Equipments (5) via the LTE air interface (9).

10. The eNodeB according to claim 9, wherein a Multi-Cell Coordination Entity (12) is hosted on the eNodeB (4),
wherein the eNodeB (4) has an M3 interface for receiving multicast control messages (MC),
wherein the proxy User Equipment (16) is further connected to the M3 interface of the eNodeB (4),
wherein the proxy User Equipment (16) is configured to extract multicast control messages (MC) from the received unicast user messages (UU) and to output the extracted multicast control messages (MC) to the M3 interface of the eNodeB (4), and
wherein the eNodeB (4) and the Multi-Cell Coordination Entity (12) are configured to transmit the multicast user messages (MU) received from the proxy User Equipment (16) to at least two User Equipments (5) via the LTE air interface (9).

11. The eNodeB according to claim 9 or 10, wherein the proxy User Equipment (16) is hosted on the eNodeB (4) as a software application.

12. The eNodeB according to claim 9 or 10, wherein the proxy User Equipment (16) is a mobile phone and is configured to receive the unicast user messages (UU) via the LTE air interface (9) and to output the extracted multicast user messages (MU) via a physical connection to the M1 interface.

## Patentansprüche

1. System zur Multicast-Kommunikation von einem Anwendungsserver (2) an zumindest zwei User Equipments (5), welches System (13) für ein zellulares LTE-Netzwerk ausgelegt ist und umfasst:
einen Evolved Packet Core (3), der eine erste Schnittstelle (SGi) zum Empfangen von Unicast-Benutzernachrichten (UU) und eine zweite Schnittstelle (S1-u) zum Ausgeben von Unicast-Benutzernachrichten (UU) hat;
ein Broadcast-Multicast-Servicecenter (10) und ein Multimedia-Broadcast-Multicast-Servicegateway (11) zur Multicast-Kommunikation;
und zumindest einen eNodeB (4) zum Kommunizieren mit den User Equipments (5) über eine LTE-Luftschnittstelle (9), wobei der eNodeB (4) mit der zweiten Schnittstelle (S1-u) des Evolved Packet Core (3) zum Empfangen von Unicast-Benutzernachrichten (UU) verbunden ist und eine M1-Schnittstelle zum Empfangen von Multicast-Benutzernachrichten (MU) hat;
einen Multicast-Server (14), welcher mit der ersten Schnittstelle (SGi) des Evolved Packet Core (3) verbunden ist und eine Schnittstelle (MB2) zum Empfangen von Nachrichten (M) vom Anwendungsserver (2) hat, welche Nachrichten (M) an die zumindest zwei User Equipments (5) zu senden sind; und
ein Proxy-User Equipment (16), welches mit der M1-Schnittstelle des eNodeB (4) verbunden ist und im Evolved Packet Core (3) registriert ist;
wobei der Multicast-Server (14) das Broadcast-Multicast-Servicecenter (10) und das Multimedia-Broadcast-Multicast-Servicegateway (11) hostet und dazu ausgebildet ist, Multicast-Benutzernachrichten (MU) aus den vom Anwendungsserver (2) empfangenen Nachrichten (M) mittels des Broadcast-Multicast-Servicecenters (10) und des Multimedia-Broadcast-Multicast-Servicegateways (11) zu erzeugen, die erzeugten Multicast-Benutzernachrichten (MU) in zumindest einer Unicast-Benutzernachricht (UU) zu verpacken, mit dem Proxy-User Equipment (16) über den Evolved Packet Core (3) einen Träger einzurichten und die Unicast-Benutzernachrichten (UU) an das Proxy-User Equipment (16) über diesen Träger zu kommunizieren;
wobei das Proxy-User Equipment (16) dazu ausgebildet ist, die Multicast-Benutzernachrichten (MU) aus den über diesen Träger empfangenen Unicast-Benutzernachrichten (UU) zu extrahieren und die erzeugten Multicast-Benutzernachrichten (MU) an die M1-Schnittstelle des eNodeB (4) auszugeben; und
wobei der eNodeB (4) ferner dazu ausgebildet ist, die vom Proxy-User Equipment (16) empfangenen Multicast-Benutzernachrichten (MU) an zumindest zwei User Equipments (5) über die LTE-Luftschnittstelle (9) zu senden.

2. System nach Anspruch 1, ferner umfassend eine vom Multicast-Server (14) gehostete Multizellen-Koordinationseinheit (12),
wobei der eNodeB (4) eine M2-Schnittstelle zum Empfangen von Multicast-Steuernachrichten (MC) hat,
wobei das Proxy-User Equipment (16) ferner mit der M2-Schnittstelle des eNodeB (4) verbunden ist,
wobei der Multicast-Server (14) ferner dazu ausgebildet ist, Multicast-Steuernachrichten (MC) aus den vom Anwendungsserver (2) empfangenen Nachrichten (M) mittels des Broadcast-Multicast-Servicecenters (10), des Multimedia-Broadcast-Multicast-Servicegateways (11) und der Multizellen-Koordinationseinheit (12) zu erzeugen und die erzeugten Multicast-Steuernachrichten (MC) in der genannten zumindest einen Unicast-Benutzernachricht (UU) zu verpacken, und
wobei das Proxy-User Equipment (16) dazu ausgebildet ist, die Multicast-Steuernachrichten (MC) aus den empfangenen Unicast-Benutzernachrichten (UU) zu extrahieren und die extrahierten Multicast-Steuernachrichten (MC) an die M2-Schnittstelle des eNodeB (4) auszugeben.

3. System nach Anspruch 1, ferner umfassend eine auf dem eNodeB (4) gehostete Multizellen-Koordinationseinheit (12),
wobei der eNodeB (4) eine M3-Schnittstelle zum Empfangen von Multicast-Steuernachrichten (MC) hat,
wobei das Proxy-User Equipment (16) ferner mit der M3-Schnittstelle des eNodeB (4) verbunden ist,
wobei der Multicast-Server (14) ferner dazu ausgebildet ist, Multicast-Steuernachrichten (MC) aus den vom Anwendungsserver (2) empfangenen Nachrichten (M) mittels des Broadcast-Multicast-Servicecenters (10) und des Multimedia-Broadcast-Multicast-Servicegateways (11) zu erzeugen und die erzeugten Multicast-Steuernachrichten (MC) in zumindest einer Unicast-Benutzernachricht (UU) zu verpacken,
wobei das Proxy-User Equipment (16) dazu ausgebildet ist, die Multicast-Steuernachrichten (MC) aus den empfangenen Unicast-Benutzernachrichten (UU) zu extrahieren und die extrahierten Multicast-Steuernachrichten (MC) an die M3-Schnittstelle des eNodeB (4) auszugeben, und
wobei der eNodeB (4) und die Multizellen-Koordinationseinheit (12) dazu ausgebildet sind, die vom Proxy-User Equipment (16) empfangenen Multicast-Benutzernachrichten (MU) an zumindest zwei User Equipments (5) über die LTE-Luftschnittstelle (9) zu senden.

4. System nach einem der Ansprüche 1 bis 3, wobei der Träger ein Standardträger ist.

5. System nach einem der Ansprüche 1 bis 3, wobei der Träger ein gewidmeter Träger auf einem Standardträger ist.

6. System nach einem der Ansprüche 1 bis 5, wobei das Proxy-User Equipment (16) auf dem eNodeB (4) als Softwareanwendung gehostet ist.

7. System nach einem der Ansprüche 1 bis 5, wobei das Proxy-User Equipment (16) ein Mobiltelefon ist und dazu ausgebildet ist, die Unicast-Benutzernachrichten (UU) über die LTE-Luftschnittstelle (9) zu empfangen und die extrahierten Multicast-Benutzernachrichten (MU) über eine physische Verbindung an die M1-Schnittstelle auszugeben.

8. System nach einem der Ansprüche 1 bis 7, wobei der Multicast-Server (14) einen eNodeB-Manager (18) umfasst, weleher dazu ausgebildet ist, den eNodeB (14) über die M1-Schnittstelle zu steuern.

9. eNodeB für ein zellulares LTE-Netzwerk-System zur Multicast-Kommunikation von einem Anwendungsserver (2) an zumindest zwei User Equipments (5), wobei der eNodeB (4) zum Kommunizieren mit den User Equipments (5) über eine LTE-Luftschnittstelle (9) ausgebildet ist, und
wobei der eNodeB (4) mit einer Schnittstelle (S1-u) eines Evolved Packet Core (3) zum Empfangen von Unicast-Benutzernachrichten (UU) verbunden ist und eine M1-Schnittstelle zum Empfangen von Multicast-Benutzernachrichten (MU) hat;
wobei der eNodeB (4) ein Proxy-User Equipment (16) umfasst, welches mit der M1-Schnittstelle des eNodeB (4) verbunden und im Evolved Packet Core (3) registriert ist;
wobei das Proxy-User Equipment (16) dazu ausgebildet ist, eine Multicast-Benutzernachricht (MU) aus Unicast-Benutzernachrichten (UU) zu extrahieren, welche über einen Träger vom Evolved Packet Core (3) empfangen werden und als Unicast-Nachrichten verpackte Multicast-Nachrichten sind, und die extrahierte Multicast-Benutzernachricht (MU) an die M1-Schnitstelle des eNodeB (4) auszugeben; und
wobei der eNodeB (4) ferner dazu ausgebildet ist, die vom Proxy-User Equipment (16) empfangenen Multicast-Benutzernachrichten (MU) an zumindest zwei User Equipments (5) über die LTE-Luftschnittstelle (9) zu senden.

10. eNodeB nach Anspruch 9, wobei eine Multizellen-Koordinationseinheit (12) auf dem eNodeB (4) gehostet ist,
wobei der eNodeB (4) eine M3-Schnittstelle zum Empfangen von Multicast-Steuernachrichten (MC) hat,
wobei das Proxy-User Equipment (16) ferner mit der M3-Schnittstelle des eNodeB (4) verbunden ist,
wobei das Proxy-User Equipment (16) dazu ausgebildet ist, Multicast-Steuernachrichten (MC) aus den empfangenen Unicast-Benutzernachrichten (UU) zu extrahieren und die extrahierten Multicast-Steuernachrichten (MC) an die M3-Schnittstelle des eNodeB (4) auszugeben, und
wobei der eNodeB (4) und die Multizellen-Koordinationseinheit (12) dazu ausgebildet sind, die vom Proxy-User Equipment (16) empfangenen Multicast-Benutzernachrichten (MU) an zumindest zwei User Equipments (5) über die LTE-Luftschnittstelle (9) zu senden.

11. eNodeB nach Anspruch 9 oder 10, wobei das Proxy-User Equipment (16) auf dem eNodeB (4) als Softwareanwendung gehostet ist.

12. eNodeB nach Anspruch 9 oder 10, wobei das Proxy-User Equipment (16) ein Mobiltelefon ist und dazu ausgebildet ist, die Unicast-Benutzernachrichten (UU) über die LTE-Luftschnittstelle (9) zu empfangen und die extrahierten Multicast-Benutzernachrichten (MU) über eine physische Verbindung an die M1-Schnittstelle auszugeben.

## Revendications

1. Système de communication multicast á partir d' un serveur d'application (2) vers au moins deux équipements utilisateurs (5), le système (13) étant configuré pour un réseau cellulaire LTE et comprenant
un Evolved Packet Core (3) ayant une première interface (SGi) pour recevoir des messages d'utilisateur unicast (UU) et une deuxième interface (S1-u) pour émettre des messages d'utilisateur unicast (UU) ;
un Broadcast Multicast Service Center (10) et un Multimedia Broadcast Multicast Service Gateway (11) pour une communication multicast ;
au moins un eNodeB (4) pour communiquer avec les équipements utilisateurs (5) par le biais d'une interface d'air LTE (9), l'eNodeB (4) étant connecté à la deuxième interface (S1-u) de l'Evolved Packet Core (3) pour recevoir des messages d'utilisateur unicast (UU) et ayant une interface M1 pour recevoir des messages d'utilisateur multicast (MU) ;
un serveur multicast (14) connecté à la première interface (SGi) de l'Evolved Packet Core (3) et ayant une interface (MB2) pour recevoir des messages (M), qui sont à envoyer aux au moins deux équipements utilisateurs (5), à partir du serveur d'application (2) ; et
un équipement utilisateur proxy (16) connecté à l'interface M1 de l'eNodeB (4), l'équipement utilisateur proxy (16) étant enregistré avec l'Evolved Packet Core (3) ;
où le serveur multicast (14) héberge le Broadcast Multicast Service Center (10) et le Multimedia Broadcast Multicast Service Gateway (11) et est configuré pour générer des messages d'utilisateur multicast (MU) à partir des messages (M) reçus depuis le serveur d'application (2) au moyen du Broadcast Multicast Service Center (10) et du Multimedia Broadcast Multicast Service Gateway (11), pour envelopper les messages d'utilisateur multicast (MU) générés en au moins un message d'utilisateur unicast (UU), pour établir une porteuse avec l'équipement utilisateur proxy (16) par le biais de l'Évolved Packet Core (3), et pour communiquer les messages d'utilisateur unicast (UU) à l'équipement utilisateur proxy (16) par le biais de ladite porteuse ;
où l'équipement utilisateur proxy (16) est configuré pour extraire les messages d'utilisateur multicast (MU) à partir des messages d'utilisateur unicast (UU) reçus par le biais de ladite porteuse et pour émettre les messages d'utilisateur multicast (MU) générés vers l'interface M1 de l'eNodeB (4) ; et
où l'eNodeB (4) est en outre configuré pour transmettre les messages d'utilisateur multicast (MU) reçus à partir de l'équipement utilisateur proxy (16) aux au moins deux équipements utilisateurs (5) par le biais de l'interface d'air LTE (9) .

2. Système selon la revendication 1, comprenant en outre une entité de Coordination Multi-Cell (12) étant hébergée sur le serveur multicast (14),
où l'eNodeB (4) a une interface M2 pour recevoir des messages de commande multicast (MC),
où l'équipement utilisateur proxy (16) est en outre connecté à l'interface M2 de l'eNodeB (4),
où le serveur multicast (14) est en outre configuré pour générer des messages de commande multicast (MC) à partir des messages (M) reçus depuis le serveur d'application (2) au moyen du Broadcast Multicast Service Center (10), du Multimedia Broadcast Multicast Service Gateway (11), et de l'entité de Coordination Multi-Cell (12), et pour envelopper les messages de commande multicast (MC) générés en ledit au moins un message d'utilisateur unicast (UU), et
où l'équipement utilisateur proxy (16) est configuré pour extraire les messages de commande multicast (MC) à partir des messages d'utilisateur unicast (UU) reçus et pour émettre les messages de commande multicast (MC) extraits vers l'interface M2 de l'eNodeB (4).

3. Système selon la revendication 1, comprenant en outre une entité de Coordination Multi-Cell (12) étant hébergée sur l'eNodeB (4),
où l'eNodeB (4) a une interface M3 pour recevoir des messages de commande multicast (MC),
où l'équipement utilisateur proxy (16) est en outre connecté à l'interface M3 de l'eNodeB (4),
où le serveur multicast (14) est en outre configuré pour générer des messages de commande multicast (MC) à partir des messages (M) reçus depuis le serveur d'application (2) au moyen du Broadcast Multicast Service Center (10) et du Multimedia Broadcast Multicast Service Gateway (11), et pour envelopper les messages de commande multicast (MC) générés en au moins un message d'utilisateur unicast (UU),
où l'équipement utilisateur proxy (16) est configuré pour extraire les messages de commande multicast(MC) à partir des messages d'utilisateur unicast (UU) reçus et pour émettre les messages de commande multicast (MC) extraits vers l'interface M3 de l'eNodeB (4), et
où l'eNodeB (4) et l'entité de Coordination Multi-Cell (12) sont configurés pour transmettre les messages d'utilisateur multicast (MU) reçus depuis l'équipement utilisateur proxy (16) à au moins deux équipements utilisateurs (5) par le biais de l'interface d'air LTE (9).

4. Système selon l'une quelconque des revendications 1 à 3, dans lequel ladite porteuse est une porteuse par défaut.

5. Système selon l'une quelconque des revendications 1 à 3, dans lequel ladite porteuse est une porteuse dédiée sur une porteuse par défaut.

6. Système selon l'une quelconque des revendications 1 à 5, dans lequel l'équipement utilisateur proxy (16) est hébergé sur l'eNodeB (4) sous forme d'une application de logiciel.

7. Système selon l'une quelconque des revendications 1 à 5, dans lequel l'équipement utilisateur proxy (16) est un téléphone mobile et est configuré pour recevoir les messages d'utilisateur unicast (UU) par le biais de l'interface d'air LTE (9) et pour émettre les messages d'utilisateur multicast (MU) extraits par le biais d'une connexion physique vers l'interface M1.

8. Système selon l'une quelconque des revendications 1 à 7, dans lequel le serveur multicast (14) comprend un gestionnaire d'eNodeB (18), configuré pour commander l'eNodeB (14) par le biais de l'interface M1.

9. eNodeB destiné à un système de réseau cellulaire LTE pour une communication multicast à partir d'un serveur d'application (2) vers au moins deux équipements utilisateurs (5), où l'eNodeB (4) est configuré pour communiquer avec les équipements utilisateurs (5) par le biais d'une interface d'air LTE (9), et
où l'eNodeB (4) est connecté à une interface (S1-u) d'un Evolved Packet Core (3) pour recevoir des messages d'utilisateur unicast (UU) et ayant une interface M1 pour recevoir des messages d'utilisateur multicast (MU) ;
où l'eNodeB (4) comprend un équipement utilisateur proxy (16) connecté à l'interface M1 de l'eNodeB (4), l'équipement utilisateur proxy (16) étant enregistré avec l'Evolved Packet Core (3) ;
où l'équipement utilisateur proxy (16) est configuré pour extraire un message d'utilisateur multicast (MU) à partir des messages d'utilisateur unicast (UU), qui sont reçus par le biais d'une porteuse à partir de l'Evolved Packet Core (3) et qui sont des messages multicast enveloppés en tant que messages unicast, et pour émettre le message d'utilisateur multicast (MU) extrait vers l'interface M1 de l'eNodeB (4) ; et
où l'eNodeB (4) est en outre configuré pour transmettre les messages d'utilisateur multicast (MU) reçus à partir de l'équipement utilisateur proxy (16) vers au moins deux équipements utilisateurs (5) par le biais de l'interface d'air LTE (9) .

10. eNodeB selon la revendication 9, dans lequel une entité de Coordination Multi-Cell (12) est hébergée sur l'eNodeB (4),
où l'eNodeB (4) a une interface M3 pour recevoir des messages de commande multicast (MC),
où l'équipement utilisateur proxy (16) est en outre connecté à l'interface M3 de l'eNodeB (4),
où l'équipement utilisateur proxy (16) est configuré pour extraire des messages de commande multicast (MC) à partir des messages d'utilisateur unicast (UU) reçus et pour émettre les messages de commande multicast (MC) extraits vers l'interface M3 de l'eNodeB (4), et
où l'eNodeB (4) et l'entité de Coordination Multi-Cell (12) sont configurés pour transmettre les messages d'utilisateur multicast (MU) reçus à partir de l'équipement utilisateur proxy (16) à au moins deux équipements utilisateurs (5) par le biais de l'interface d'air LTE (9).

11. eNodeB selon la revendication 9 ou 10, dans lequel l'équipement utilisateur proxy (16) est hébergé sur l'eNodeB (4) sous forme d'une application de logiciel.

12. eNodeB selon la revendication 9 ou 10, dans lequel l'équipement utilisateur proxy (16) est un téléphone mobile et est configuré pour recevoir les messages d'utilisateur unicast (UU) par le biais de l'interface d'air LTE (9) et pour émettre les messages d'utilisateur multicast (MU) extraits par le biais d'une connexion physique vers l'interface M1.
